# EUROPEAN PATENT SPECIFICATION

(11) **EP 3 746 674 B1**
(45) Date of publication and mention of the grant of the patent: **18.01.2023**
(21) Application number: 18702974.9
(22) Date of filing: 31.01.2018
(51) Int. Cl.: F16F 9/32, F16F 9/38, B60G 17/019

(54) **DAMPER ASSEMBLY**
DAMPFERVORRICHTUNG
DISPOSITIF D'AMORTISSEUR

(43) Date of publication of application: 09.12.2020
(73) Proprietor: HELLA GMBH & CO. KGAA, 59552 Lippstadt (DE)
(72) Inventor: BARTSCHT, Manfred, 33154 Salzkotten (DE); HOPPE, Steffen, 59555 Lippstadt (DE)
(86) International application number: PCT/EP2018/052344
(87) International publication number: WO 2019/149344

(56) References cited:
- EP-A1- 0 486 848
- DE-U1-202006 010 887
- US-A- 4 502 006
- US-A- 5 952 823
- US-A1- 2017 307 412

## Description

The present invention relates to the field of damper assemblies according to the preamble of claim 1.

Such damper assemblies are already known in different embodiments.

For example, from the DE 39 39 098 A1 a damper assembly for a vehicle is known. This known damper assembly, comprises a damper with a tube and a piston moveable relative to said tube of said damper as well as an inductive sensor with a stator and a cursor moveable relative to said stator of said inductive sensor, whereat said stator is mounted to a support of said damper assembly stationary to said piston and whereat said tube is built to be said cursor, too.

The document US 5 952 823 A discloses a damper assembly according to the preamble of claim 1.

It is an object of the invention to provide another embodiment of a damper assembly. This object of the invention is solved by a damper assembly according to claim 1, wherein said support is built as a dirt cap for said damper of said damper assembly, whereat said dirt cap comprises an inner surface facing said damper and an outer surface not facing said damper, and said stator is mounted on said outer surface of said dirt cap.

A main advantage of the damper assembly according to the invention is, that such a damper assembly can be realized with less effort. The design of the inventive damper assembly is simpler and easier to assemble. The inductive sensor can be used as a level sensor for a vehicle in order to relatively determine rotary or sliding motions between two parts of the vehicle, for example to determine the vehicle's bank angle and to control headlights of the vehicle accordingly. A further advantage of the invention is, that by employing a dirt cap as the support for the stator of said inductive sensor the number of parts used for the damper assembly according to the invention is reduced, thus the inventive damper assembly can be produced with less cost. Said dirt cap of said damper assembly is used for keeping the area of the damper assembly clean, in which said damper is moved.

Basically, said dirt cap can be of any useful and applicable type, material, dimension, shape and arrangement. Advantageously, said dirt cap is built as a tube concentrically positioned to said tube of said damper. This way, the space necessary for the damper assembly according to the invention is reduced, too.

Another advantageous development of the damper assembly according to the invention is, that said dirt cap comprises a frame which surrounds an area of said outer surface used for mounting said stator of said inductive sensor to said dirt cap, whereat said frame protrudes from said outer surface of said dirt cap. Hereby, the correct position of said stator of said inductive sensor is marked easily. Furthermore, said stator of said inductive sensor can be positioned and assembled to said outer surface of said dirt cap easier. The fixation of said stator to said outer surface can be realized more robust.

An advantageous development of the aforementioned embodiment is, that said stator of said inductive sensor is sealed with a sealing, which is casted into said area of said outer surface of said dirt cap surrounded by said frame of said dirt cap. That way, said stator is protected against environmental impacts like mechanical, electrical and/or chemical stress. Furthermore, said sealing can be used for the fixation of said stator to said outer surface of said dirt cap, too. Of course, said stator can be fixed to said outer surface of said dirt cap in any suitable manner. The same is true for the sealing of said stator against environmental impacts. Maybe, there is no sealing necessary at all. In another embodiment, said stator can be fixed or fixed and sealed to said outer surface of said dirt cap via a plastic lid laser welded to said outer surface of said dirt cap.

In general, said stator of said inductive sensor can be of any useful and applicable type, material, dimension, shape and arrangement. Advantageously, said stator of said inductive sensor is designed and positioned, that said stator extends substantially along an axis said piston of said damper is moved along, whereat the extension of said stator perpendicular to said axis is far less than the extension along said axis. Hereby, the space needed for the damper assembly can still be reduced. Moreover, the arrangement of said dirt cap with said stator assembled to it can be modified for different applications. Thus, applications at problematic locations are possible more easily.

Said cursor of said inductive sensor can be of any useful and applicable type, material, dimension, shape and arrangement, too.

An advantage development of the damper assembly according to the invention is, that said cursor of said inductive sensor is a part of a separate cover of said tube of said damper. That way, said cover with said cursor as well as said tube of said damper can be tailored to the very specific needs. Thus, compromises are limited to a minimum.

According to the invention, said cursor of said inductive sensor is built as a ring which is mounted to said cover in an electrically insulated manner or which is mounted to said cover built from an electrically insulating material. Hereby, said cover with said cursor is realized quite easily. Furthermore, said inductive sensor can be adjusted for different applications without modifying the general design of the inventive damper assembly.

Of course, said cursor can be of any suitable material, shape, dimension and arrangement being a part of said tube, e.g. arrangement being a part of said cover of said tube. For example, said cursor can be built as a segment of a ring of said cover of said tube.

According to the invention, said cover comprises sliders which are protruding from an outer surface of said cover for sliding along said inner surface of said dirt cap. This way, said cover and therefore said tube of said damper is guided relative to said dirt cap while said piston of said damper is moved along said axis. Furthermore, a correct distance between said tube of said damper and said dirt cap is maintained while said tube of said damper is moved relative to said dirt cap of said damper assembly. This is important for the correct function of said inductive sensor of said damper assembly.

Basically, said material of said dirt cap for said damper and/or said cover of said tube of said damper can be chosen from a variety of suitable materials. The person skilled in the art will choose the material, which fits best the specific needs of the particular case.

An advantage development of the damper assembly according to the invention is, that said dirt cap for said damper and/or said cover of said tube of said damper are/is built from a plastic material. Plastic materials are cheap and easy to use. Furthermore, plastic materials can be tailored to the very specific needs of the particular application of the damper assembly according to the invention.

The Figures are schematic illustrations of a damper assembly according to the present invention, wherein only the details necessary for the understanding of the invention are shown.

It is shown by:
- Fig. 1: an embodiment of the damper assembly according to the invention in an exploded view, with the tube of the damper in a first position,
- Fig. 2: the embodiment of the damper in a perspective view, with the tube of the damper in a second position and
- Fig. 3: the cover of the damper with the cursor of the inductive sensor in a perspective view.

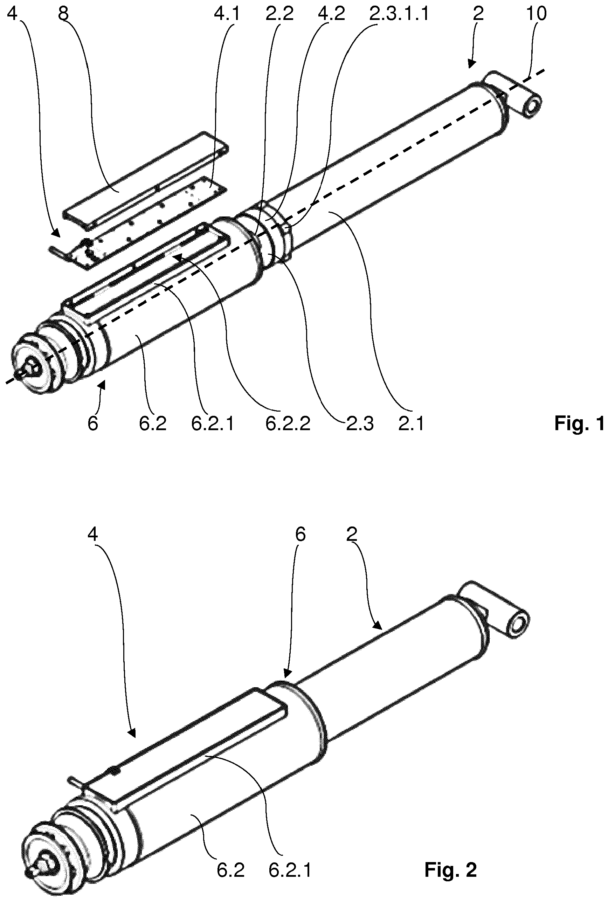

Fig. 1 displays an embodiment of the damper assembly according to the invention in a partial view. Said damper assembly is used for a vehicle and comprises a damper 2 with a tube 2.1 and a piston 2.2 moveable relative to said tube 2.1 of said damper 2 and an inductive sensor 4 with a stator 4.1 and a cursor 4.2 moveable relative to said stator 4.1 of said inductive sensor 4. Said vehicle is not displayed. Said tube 2.1 of said damper 2 is fixed to a first component of said vehicle and said piston 2.2 of said damper 2 is fixed to a second component of said vehicle. Said first and said second component of said vehicle are not displayed, too. The person skilled in the art knows how to fix said tube 2.1 and said piston 2.2 of said damper 2 to said components of said vehicle. Said components could be a chassis of said vehicle and an axle for the wheels of said vehicle.

Said stator 4.1 is mounted to a support 6 of said damper assembly stationary to said piston 2.2 and said cursor 4.2 is a part of said tube 2.1 of said damper 2. Said stator 4.1 of said inductive sensor 4 is built as a printed circuit board 4.1.

Said support 6 is built as a dirt cap 6 for said damper 2 of said damper assembly, whereat said dirt cap 6 comprises an inner surface, not shown, facing said damper 2 and an outer surface 6.2 not facing said damper 2. Said stator 4.1 is mounted on said outer surface 6.2 of said dirt cap 6.

Said inductive sensor 4 can be used as a level sensor 4 for said vehicle in order to relatively determine rotary or sliding motions between said first and said second component of said vehicle, for example to determine said vehicle's bank angle and to control headlights of said vehicle accordingly. Said headlights are not displayed.

As can be seen from Fig. 1 and 2, said dirt cap 6 is built as a tube 6 concentrically positioned to said tube 2.1 of said damper 2. Furthermore, said dirt cap 6 comprises a frame 6.2.1 which surrounds an area 6.2.2 of said outer surface 6.2 used for mounting said stator 4.1 of said inductive sensor 4 to said dirt cap 6, whereat said frame 6.2.1 protrudes from said outer surface 6.2 of said dirt cap 6. Thus, said frame 6.2.1 is an integral part of said dirt cap 6.

Said frame 6.2.1 protruding from said outer surface 6.2 of said dirt cap 6 and said area surrounded by said frame 6.2.1 are designed and arranged for mounting said stator 4.1 of said inductive sensor 4 to said dirt cap 6. Thus, said stator 4.1 of said inductive sensor 4, namely said printed circuit board 4.1, is placed into said area 6.2.2 and fixed and sealed by potting a potting material 8 into said area 6.2.2 surrounded by said frame 6.2.1. Thus, said stator 4.1 of said inductive sensor 4 is sealed with a sealing 8, which is casted into said frame 6.2.1 of said dirt cap 6.

As can be seen from Fig. 1 and 2, said stator 4.1 of said inductive sensor 4 is designed and positioned, that said stator 4.1 extends substantially along an axis said piston 2.2 of said damper 2 is moved along. Said axis is symbolized in Fig. 1 by a broken line 10. The extension of said stator 4.1 perpendicular to said axis 10 is far less than the extension along said axis 10.

Said cursor 4.2 of said inductive sensor 4 is a part of a separate cover 2.3 of said tube 2.1 of said damper 2. Said separate cover 2.3 is fixed to said tube 2.1 of said damper 2 in a way known by a person skilled in the art. Thus, said tube 2.1 is sealed with said cover 2.3 allowing said piston 2.2 to move relative to said tube 2.1 of said damper 2. Said cursor 4.2 of said inductive sensor 4 is built as a metallic ring 4.2 which is mounted to said cover 2.3. Said cover 2.3 is built from an electrically insulating material, namely a plastic material.

The same is true for said dirt cap 6, which is built form a plastic material, too.

In order to support the movement of said piston 2.2 relative to said tube 2.1 of said damper 2 and thus supporting the movement of said tube 2.1 relative to said dirt cap 6 of said damper assembly, said cover 2.3 of said tube 2.1 shows a number of sliders 2.3.1.1 which are protruding from an outer surface 2.3.1 of said cover 2.3 for sliding along said inner surface 6.1 of said dirt cap 6. That way, a correct distance between said tube 2.1 of said damper 2 and said dirt cap 6 is maintained while said tube 2.1 of said damper 2 is moved relative to said dirt cap 6 of said damper assembly. This is important for the correct function of said inductive sensor 4 of said inventive damper assembly.

Fig. 2 shows the embodiment according to Fig. 1 with said tube 2.1 of said damper 2 moved towards said dirt cap 6, compared to Fig. 1.

Fig. 1 and 2 show, that said dirt cap 6 is built as a tube 6 concentrically positioned to said tube 2.1 of said damper 2.

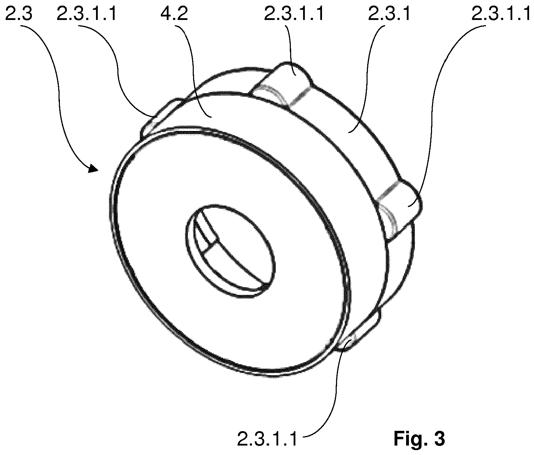

In Fig. 3 said cover 2.3 with said cursor 4.2 of said inductive sensor 4 is displayed in detail. Fig. 3 shows said cover 2.3 in a perspective view watched from said dirt cap 6. See also Fig. 1 and Fig. 2.

If said vehicle with said damper assembly moves along a road, the wheels of said vehicle move relative to said chassis of said vehicle. Thus, said piston 2.2 of said damper 2 moves relative to said tube 2.1 of said damper 2. Therefore, said cursor 4.2 of said inductive sensor 4, which is fixed to said cover 2.3 of said tube 2.1 is moved relative to said dirt cap 6 and thus relative to said stator 4.1 of said inductive sensor 4, which is fixed to said outer surface 6.2 of said dirt cap 6.

Because of this relative movement between said cursor 4.2 and said stator 4.1 of said inductive sensor 4, an electrical signal is induced in said stator 4.1 of said inductive sensor 4, which can be forwarded as an output signal to a control unit of said vehicle in order to determine said vehicle's bank angle and to control headlights of said vehicle accordingly. Said control unit of said vehicle is not displayed in Fig. 1 to 3. Of course, said output signal of said inductive sensor 4 can be used in a variety of ways for driving different components of said vehicle. The person skilled in the art will choose out of them accordingly.

The present invention is not limited to the exemplary embodiment of the inventive damper assembly discussed above. The invention is defined in the appended claims.

For instance, the inventive damper assembly can be used in a variety of ways and is suitable for a lot of different applications. Thus, the damper assembly according to the invention is not limited to vehicles.

### List of reference numbers

- 2: Damper
- 2.1: Tube of damper 2
- 2.2: Piston of damper 2
- 2.3: Cover of tube 2.1
- 2.3.1: Outer surface of cover 2.3
- 2.3.1.1: Protrusion of outer surface 2.3.1
- 4: Inductive sensor
- 4.1: Stator of inductive sensor 4
- 4.2: Cursor of inductive sensor 4
- 6: Support, built as a dirt cap
- 6.2: Outer surface of dirt cap 6
- 6.2.1: Frame protruding from outer surface 6.2
- 6.2.2: Area of outer surface 6.2 surrounded by frame 6.2.1
- 8: sealing
- 10: Axis of movement of piston 2.2 relative to tube 2.1

## Claims

1. Damper assembly, comprising a damper (2) with a tube (2.1) and a piston (2.2) moveable relative to said tube (2.1) of said damper (2) and an inductive sensor (4) with a stator (4.1) and a cursor (4.2) moveable relative to said stator (4.1) of said inductive sensor (4), whereat said stator (4.1) is mounted to a support (6) of said damper assembly stationary to said piston (2.2) and whereat said cursor (4.2) is a part of said tube (2.1),
wherein said support (6) is built as a dirt cap (6) for said damper (2) of said damper assembly, whereat said dirt cap (6) comprises an inner surface facing said damper (2) and an outer surface (6.2) not facing said damper (2), and said stator (4.1) is mounted on said outer surface (6.2) of said dirt cap (6), wherein said dirt cap (6) is built as a tube (6) concentrically positioned to said tube (2.1) of said damper (2),
wherein said cursor (4.2) of said inductive sensor (4) is a part of a separate cover (2.3) of said tube (2.1) of said damper (2),
**characterized in that,**
• said cursor (4.2) of said inductive sensor (4) is built as a ring (4.2), which is mounted to said cover in an electrically insulated manner or which is mounted to said cover (2.3) built from an electrically insulating material,
• said cover (2.3) comprises sliders (2.3.1.1) which are protruding from an outer surface (2.3.1) of said cover (2.3) for sliding along said inner surface (6.1) of said dirt cap (6).

2. Damper assembly according to claim 1,
wherein,
said dirt cap (6) comprises a frame (6.2.1) which surrounds an area (6.2.2) of said outer surface (6.2) used for mounting said stator (4.1) of said inductive sensor (4) to said dirt cap (6), whereat said frame (6.2.1) protrudes from said outer surface (6.2) of said dirt cap (6).

3. Damper assembly according to claim 2,
wherein,
said stator (4.1) of said inductive sensor (4) is sealed with a sealing (8), which is casted into said area (6.2.2) of said outer surface (6.2) of said dirt cap (6) surrounded by said frame (6.2.1) of said dirt cap (6).

4. Damper assembly according to one of the claims 1 to 3,
wherein,
said stator (4.1) of said inductive sensor (4) is designed and positioned, that said stator (4.1) extends substantially along an axis (10) said piston (2.2) of said damper (2) is moved along, whereat the extension of said stator (4.1) perpendicular to said axis (10) is far less than the extension along said axis (10).

5. Damper assembly according to one of the claims 1 to 4,
wherein,
said dirt cap (6) for said damper (2) and/or said cover (2.3) of said tube (2.1) of said damper (2) are/is built from a plastic material.

## Patentansprüche

1. Dämpferanordnung, umfassend einen Dämpfer (2) mit einem Rohr (2.1) und einem relativ zu dem Rohr (2.1) des Dämpfers (2) bewegbaren Kolben (2.2), und einen induktiven Sensor (4) mit einem Stator (4.1) und einem relativ zu dem Stator (4.1) des induktiven Sensors (4) bewegbaren Cursor (4.2), wobei der Stator (4.1) an einer Stütze (6) der Dämpferanordnung, stationär zu dem Kolben (2.2), montiert ist, und wobei der Cursor (4.2) ein Teil des Rohres (2.1) ist,
wobei die Stütze (6) als eine Schmutzkappe (6) für den Dämpfer (2) der Dämpferanordnung gebaut ist, wobei die Schmutzkappe (6) eine dem Dämpfer (2) zugewandte Innenfläche und eine nicht dem Dämpfer (2) zugewandte Außenfläche (6.2) umfasst, und der Stator (4.1) auf der Außenfläche (6.2) der Schmutzkappe (6) montiert ist, wobei die Schmutzkappe (6) als ein konzentrisch um das Rohr (2.1) des Dämpfers (2) herum positioniertes Rohr (6) ausgebildet ist,
wobei der Cursor (4.2) des induktiven Sensors (4) ein Teil einer separaten Abdeckung (2.3) des Rohres (2.1) des Dämpfers (2) ist,
**dadurch gekennzeichnet, dass**
• der Cursor (4.2) des induktiven Sensors (4) als ein Ring (4.2) gebaut ist, der in einer elektrisch isolierten Weise an der Abdeckung montiert ist oder der an der Abdeckung (2.3), die aus einem elektrisch isolierenden Material hergestellt ist, montiert ist,
• wobei die Abdeckung (2.3) Vorsprünge (2.3.1.1) umfasst, die zum Gleiten entlang der Innenfläche (6.1) der Schmutzkappe (6) von einer Außenfläche (2.3.1) der Abdeckung (2.3) vorstehen.

2. Dämpferanordnung nach Anspruch 1,
wobei
die Schmutzkappe (6) einen Rahmen (6.2.1) umfasst, der einen zum Montieren des Stators (4.1) des induktiven Sensors (4) an der Schmutzkappe (6) verwendeten Bereich (6.2.2) der Außenfläche (6.2) umgibt, wobei der Rahmen (6.2.1) von der Außenfläche (6.2) der Schmutzkappe (6) vorsteht.

3. Dämpferanordnung nach Anspruch 2,
wobei
der Stator (4.1) des induktiven Sensors (4) mit einer Dichtung (8) abgedichtet ist, die in den Bereich (6.2.2) der Außenfläche (6.2) der Schmutzkappe (6), umgeben von dem Rahmen (6.2.1) der Schmutzkappe (6), gegossen ist.

4. Dämpferanordnung nach einem der Ansprüche 1 bis 3,
wobei
der Stator (4.1) des induktiven Sensors (4) so gestaltet und positioniert ist, dass sich der Stator (4.1) im Wesentlichen entlang einer Achse (10) erstreckt, entlang welcher der Kolben (2.2) des Dämpfers (2) bewegt wird, wobei die Ausdehnung des Stators (4.1) senkrecht zur Achse (10) wesentlich kleiner als die Ausdehnung entlang der Achse (10) ist.

5. Dämpferanordnung nach einem der Ansprüche 1 bis 4,
wobei
die Schmutzkappe (6) des Dämpfers (2) und/oder die Abdeckung (2.3) des Rohres (2.1) des Dämpfers (2) aus einem Kunststoffmaterial gebaut ist/sind.

## Revendications

1. Ensemble amortisseur comprenant un amortisseur (2) avec un tube (2.1) et un piston (2.2) mobile par rapport audit tube (2.1) dudit amortisseur (2) et un capteur inductif (4) avec un stator (4.1) et un curseur (4.2) mobile par rapport audit stator (4.1) dudit capteur inductif (4), dans lequel ledit stator (4.1) est monté sur un support (6) dudit ensemble amortisseur fixe par rapport audit piston (2.2) et dans lequel ledit curseur (4.2) est une partie dudit tube (2.1),
ledit support (6) étant construit comme un capuchon anti-poussière (6) pour ledit amortisseur (2) dudit ensemble amortisseur, dans lequel ledit capuchon anti-poussière (6) comprend une surface intérieure faisant face audit amortisseur (2) et une surface extérieure (6.2) ne faisant pas face audit amortisseur (2) et ledit stator (4.1) étant monté sur ladite surface extérieure (6.2) dudit capuchon anti-poussière (6), ledit capuchon anti-poussière (6) étant construit comme un tube (6) positionné concentriquement par rapport au tube (2.1) dudit amortisseur (2),
ledit curseur (4.2) dudit capteur inductif (4) faisant partie d'un couvercle séparé (2.3) dudit tube (2.1) dudit amortisseur (2),
**caractérisé en ce que**
• ledit curseur (4.2) dudit capteur inductif (4) est construit comme un anneau (4.2), qui est monté sur ledit couvercle d'une manière électriquement isolée ou qui est monté sur ledit couvercle (2.3) construit à partir d'un matériau électriquement isolant,
• ledit couvercle (2.3) comprend des coulisseaux (2.3.1.1) qui font saillie à partir d'une surface extérieure (2.3.1) dudit couvercle (2.3) pour glisser le long de ladite surface intérieure (6.1) dudit capuchon anti-poussière (6).

2. Ensemble amortisseur selon la revendication 1,
sachant que
ledit capuchon anti-poussière (6) comprend un cadre (6.2.1) qui entoure une zone (6.2.2) de ladite surface extérieure (6.2) utilisée pour monter ledit stator (4.1) dudit capteur inductif (4) sur ledit capuchon anti-poussière (6), ledit cadre (6.2.1) faisant saillie de ladite surface extérieure (6.2) dudit capuchon anti-poussière (6).

3. Ensemble amortisseur selon la revendication 2,
sachant que
ledit stator (4.1) dudit capteur inductif (4) est scellé avec un joint d'étanchéité (8), qui est coulé dans ladite zone (6.2.2) de ladite surface extérieure (6.2) dudit capuchon anti-poussière (6) entouré par ledit cadre (6.2.1) dudit capuchon anti-poussière (6).

4. Ensemble amortisseur selon l'une des revendications 1 à 3,
sachant que
ledit stator (4.1) dudit capteur inductif (4) est conçu et positionné de telle sorte que ledit stator (4.1) s'étend sensiblement le long d'un axe (10) le long duquel ledit piston (2.2) dudit amortisseur (2) est déplacé, l'extension dudit stator (4.1) perpendiculaire audit axe (10) étant bien inférieure à l'extension le long dudit axe (10).

5. Ensemble amortisseur selon l'une des revendications 1 à 4,
sachant que
ledit capuchon anti-poussière (6) pour ledit amortisseur (2) et/ou ledit couvercle (2.3) dudit tube (2.1)
dudit amortisseur (2) sont/est construit(s) en matière plastique.
